(19) Europäisches Patentamt
European Patent Office
Office européen des brevets

(11) EP 3 815 898 A1

(12) **EUROPÄISCHE PATENTANMELDUNG**

(43) Veröffentlichungstag:
**05.05.2021 Patentblatt 2021/18**

(51) Int Cl.:
***B32B 27/18*** *(2006.01)* ***B32B 27/36*** *(2006.01)*
***C08L 67/02*** *(2006.01)* ***C08L 69/00*** *(2006.01)*

(21) Anmeldenummer: **19205537.4**

(22) Anmeldetag: **28.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **SCHICHTENVERBUND AUS POLYCARBONAT UND POLYCARBONATBLEND ZUR VERBESSERTEN LACKIERBARKEIT**

(57) Die vorliegende Erfindung betrifft einen Schichtenverbund aus einer, gegebenenfalls Fasern enthaltenden, Polycarbonat-basierten Matrix und einer Deckschicht aus speziellen Polycarbonat-Polyester-Blends, sowie einen Schichtenverbund wie zuvor beschrieben, dessen Deckschicht auf der Matrix abgewandten Seite mit einer Lackierung versehen ist, Verfahren zur Herstellung dieser Verbunde, sowie ihre Verwendung zur Herstellung beispielsweise von Automobilanbauteilen.

EP 3 815 898 A1

Printed by Jouve, 75001 PARIS (FR)

## Beschreibung

Die vorliegende Erfindung betrifft einen Schichtenverbund aus einer, gegebenenfalls Fasern enthaltenden, Polycarbonat-basierten Matrix und einer Deckschicht aus speziellen Polycarbonat-Polyester-Blends, sowie einen Schichtenverbund wie zuvor beschrieben, dessen Deckschicht auf der Matrix abgewandten Seite mit einer Lackierung versehen ist, Verfahren zur Herstellung dieser Verbunde, sowie ihre Verwendung zur Herstellung beispielsweise von Automobilanbauteilen.

Polycarbonate, Polycarbonatblends, beispielsweise auf Basis von PC und ASA oder ABS, und Polycarbonatcomposite, d.h. faserverstärkte Polycarbonate, sind in der Automobilindustrie seit langem etabliert. Sie werden zur Herstellung beispielsweise von Automobilanbauteilen verwendet. Durch ihr geringes Gewicht wird das Gewicht der damit erzeugten Fahrzeugkomponenten im Vergleich zu entsprechenden Fahrzeugkomponenten, die unter Verwendung herkömmlicher Materialien hergestellten wurden, deutlich verringert, und dies bei gleichbleibender Festigkeit und Sicherheit. So kann der Kraftstoffverbrauch erheblich reduziert werden.

Die Kunststoffteile werden mit Grundierungsschichten, sogenannten Primern, zum Schutz gegen Umwelteinflüsse, und Lackschichten zur Erzielung optischer oder effektgebender Eigenschaften beschichtet. Beim Einbrennen dieser Beschichtungen kann es zur Bildung von Blasen, Blistern, sowie Einfallstellen und Rissen in der Beschichtung kommen, wie im experimentellen Teil des vorliegenden Dokuments gezeigt wird. Dies ist aus ästhetischen Gründen unerwünscht und kann darüber hinaus zur Beeinträchtigung der Schutzwirkung der Beschichtung führen.

Die Aufgabe der vorliegenden Erfindung bestand in der Bereitstellung eines Polycarbonat-basierten Systems, welches ohne die aufgezeigten Nachteile des Standes der Technik mit einer Lackierung, im Besonderen einer Automobilanbauteil-Lackierung, versehen werden kann.

Gelöst wurde die Aufgabe durch einen Mehrschichtaufbau aus einer Polycarbonat basierten Matrix und einer Deckschicht aus speziellen Polycarbonat-Polyester-Blends.

Gegenstand der vorliegenden Erfindung ist ein Schichtenverbund, umfassend eine Substratschicht S und eine mit der Substratschicht S wenigstens teilweise verbundene Deckschicht D,
wobei das Material der Substratschicht S ein erstes thermoplastisches Polymer umfasst und das Material der Deckschicht D ebenfalls das erste thermoplastische Polymer umfasst,
**dadurch gekennzeichnet, dass**
das erste thermoplastische Polymer ein aromatisches Polycarbonat ist und
in dem Material der Deckschicht D das erste thermoplastische Polymer als Blend mit einer Polyesterkomponente P vorliegt, wobei

i) der Anteil dieser Polyesterkomponente P ≥ 2 Gewichts-%, bevorzugt ≥ 5 Gewichts-%, besonders bevorzugt ≥ 8 Gewichts-%, bezogen auf das Gesamtgewicht des Materials der Deckschicht D, beträgt und wobei die Polyesterkomponente P mindestens ein Polycycloalkylenterephthalat umfasst oder daraus besteht,
ii) der Anteil dieser Polyesterkomponente P ≥ 10 Gewichts-%, bevorzugt ≥ 15 Gewichts-%, besonders bevorzugt ≥ 17 Gewichts-%, bezogen auf das Gesamtgewicht des Materials der Deckschicht D, beträgt und wobei die Polyesterkomponente P mindestens ein Polyalkylenterephthalat umfasst oder daraus besteht,
iii) der Anteil dieser Polyesterkomponente P ≥ 20 Gewichts-%, bevorzugt ≥ 30 Gewichts-%, besonders bevorzugt ≥ 35 Gewichts-%, bezogen auf das Gesamtgewicht des Materials der Deckschicht D, beträgt und wobei die Polyesterkomponente P mindestens ein Polyalkylennaphthalat umfasst oder daraus besteht,
iv) der Anteil dieser Polyesterkomponente P ≥ 2 Gewichts-%, bevorzugt ≥ 5 Gewichts-%, besonders bevorzugt ≥ 8 Gewichts-%, bezogen auf das Gesamtgewicht des Materials der Deckschicht D, beträgt und wobei die Polyesterkomponente P eine Mischung umfasst oder aus einer Mischung besteht aus mindestens 2 der folgenden Komponenten:

- mindestens ein Polycycloalkylenterephthalat,
- mindestens ein Polyalkylenterephthalat,
- mindestens ein Polyalkylennaphthalat.

Bevorzugt wird in Variante iv) eine Mischung eingesetzt, die umfasst oder besteht aus

- mindestens einem Polycycloalkylenterephthalat und mindestens einem Polyalkylenterephthalat,

oder

- mindestens einem Polycycloalkylenterephthalat und mindestens einem Polyalkylennaphthalat,

oder

- mindestens einem Polyalkylenterephthalat und mindestens einem Polyalkylennaphthalat.

Besonders bevorzugt wird in Variante iv) eine Mischung eingesetzt, die umfasst oder besteht aus mindestens einem Polycycloalkylenterephthalat und mindestens einem Polyalkylenterephthalat.

DE 20 2017 004083 U1 offenbart einen Mehrschichtenaufbau aus einen Kern auf Basis eines Fasern enthaltenden Thermoplasten, bei dem es sich bevorzugt um Polypropylen oder Polyamid handelt, und einer Decklage aus einer Thermoplastfolie, die ebenfalls bevorzugt aus Polypropylen oder Polyamid besteht (Anspruch 1, [0014], [0041]). Polycarbonat-basierte Systeme werden nicht erwähnt. Auch befasst sich das Dokument nicht mit der Lackierbarkeit von Thermoplasten.

Gemäß dem oben genannten erfindungsgemäßen Gegenstand umfasst oder besteht Komponente P aus bestimmten Polyesterkomponenten (siehe i) bis iv)). Bei der Ausführungsform "umfasst" kann die entsprechende Polyesterkomponente beispielsweise Verunreinigungen oder auch weitere Kunststoffe, wie z.B. weitere Polyester enthalten, wobei es sich bei letzteren nicht um solche handelt, die in den übrigen Polyesterkomponenten genannt sind. So beschreibt beispielsweise Ausführungsform i) eine Polyesterkomponente P, die ein oder mehrere Polycycloalkylenterephthalat/e umfasst. In dieser Ausführungsform können nicht zusätzlich z.B. Polyalkylenterephthalate in der Polyesterkomponente enthalten sein. Sind zusätzlich Polyalkylenterephthalate enthalten, so ist dies als Ausführungform iv) zu behandeln.

Beschreibung der Substratschicht S

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Das gewichtsgemittelte Molekulargewicht $M_w$ der aromatischen Polycarbonate und Polyestercarbonate liegt im Bereich von 15.000 bis 35.000, bevorzugt im Bereich von 20.000 bis 33.000, weiter bevorzugt 23.000 bis 31.000, bestimmt durch GPC (Gelpermeationschromatographie in Methylenchlorid mit Polycarbonat als Standard).

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2)

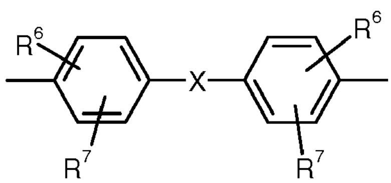

(2),

in der

$R^6$ und $R^7$ unabhängig voneinander für H, $C_1$- bis $C_{18}$-Alkyl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, $-SO_2-$
oder für einen Rest der Formel (3a)

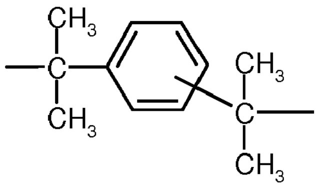

(2a).

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Am stärksten bevorzugt ist 2,2-Bis-(4-hydroxyphenyl)-propan (Bisphenol A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese

zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride. Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Das Material der Substratschicht S kann weiterhin von Polycarbonat verschiedene Kunststoffe als Blendpartner enthalten.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen. Die Blendpartner werden in Mengen von bevorzugt maximal 70 Gew.-%, besonders bevorzugt maximal 50 Gew.-%, ganz besonders bevorzugt maximal 35 Gew.-% bezogen auf das Gesamtgewicht aus Polycarbonat und Blendpartner eingesetzt.

Zusätzlich sind optional bis zu 10,0 Gew.-%, bevorzugt 0,10 bis 8,0 Gew.-%, besonders bevorzugt 0,2 bis 3,0 Gew.-% bezogen auf das Gesamtgewicht des Materials der Substratschicht, sonstige übliche Additive enthalten.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Die Substratschicht kann eine oder mehrere, der Verstärkung dienende, Faserlagen aus einem Fasermaterial enthalten. Es entstehen dadurch faserhaltige Verbundwerkstoffe, im Folgenden Faserverbundwerkstoffe genannt. Die Substratschicht S kann auch aus mehreren Lagen Faserverbundwerkstoff bestehen und wird dann als Mehrschichtverbundwerkstoff bezeichnet.

Faserverbundwerkstoff

Der chemische Aufbau der Fasern des Fasermaterials kann von der unterschiedlichsten Art sein. Die Fasermaterialien besitzen einen höheren Erweichungs- bzw. Schmelzpunkt als das jeweils vorliegende thermoplastische Matrixmaterial.
Das eingesetzte Fasermaterial ist bevorzugt mit geeigneten Schlichten beschichtet.

Bei einer Ausführungsform des Faserverbundwerkstoffs ist die Faserlage als unidirektionale Faserlage, als Gewebe- oder Gelegelage, als Gestrick, Gewirk oder Geflecht, als Wirrfasermatten oder Vliesen oder als Kombination daraus ausgebildet. In Versuchen wurden mit unidirektionalen Faserlagen, Geweben und Gelegen die besten Eigenschaften der Faserverbundwerkstoffe erreicht.

Unidirektional im Sinne der Erfindung bedeutet, dass die Fasern im Wesentlichen unidirektional ausgerichtet sind, also der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

Das Fasermaterial kann als Kurzfasern (Länge < 1mm), als Langfasern (1 bis 50 mm) oder als Endlosfasern (> 50 mm) vorliegen. Bevorzugt liegt es als Langfasern oder Endlosfasern vor. Das Fasermaterial sind erfindungsgemäß bevorzugt Mahlfasern oder Schnittglasfasern. "Liegt vor" bedeutet hierbei, dass es auch eine Mischung mit anderen Fasermaterialien sein kann. Bevorzugt ist das jeweilige Fasermaterial aber das einzige Fasermaterial.

Der Begriff "Endlosfaser" ist im Sinne der Erfindung als Abgrenzung zu den dem Fachmann ebenfalls bekannten Kurz- oder Langfasern zu verstehen. Endlosfasern erstrecken sich in der Regel über die gesamte Länge der Lage Faserverbundwerkstoff. Der Begriff Endlosfaser leitet sich davon ab, dass diese Fasern auf einer Rolle aufgewickelt vorliegen und während der Herstellung der einzelnen Faserverbundwerkstofflagen abgewickelt und mit Kunststoff imprägniert werden, so dass, mit Ausnahme von gelegentlichem Bruch oder Rollenwechsel, ihre Länge üblicherweise im Wesentlichen mit der Länge der hergestellten Faserverbundwerkstofflage übereinstimmt.

Beispiele für Fasermaterialien sind anorganische Materialien wie silikatische und nichtsilikatische Gläser der verschiedensten Art, Kohlenstoff, Basalt, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyamide, Polyimide, Aramide, flüssigkristalline Polymere, Polyphenylensulfide, Polyetherketone, Polyetheretherketone, Polyetherimide. Bevorzugt sind hochschmelzende Materialien, beispielsweise Gläser, Kohlenstoff, Aramide, Basalt, Liquid-crystal-Polymere, Polyphenylensulfide, Polyetherketone, Polyetheretherketone und Polyetherimide. Besonders bevorzugte Fasermaterialien sind Glasfasern oder Carbonfasern.

Unter einer Lage Fasermaterial, auch als Faserlage bezeichnet, wird eine flächige Lage verstanden, welche durch im Wesentlichen in einer Fläche angeordnete Fasern gebildet wird. Die Fasern können durch ihre Lage zueinander miteinander verbunden sein, beispielsweise durch eine gewebeartige Anordnung der Fasern. Weiterhin kann die Faserlage auch einen Anteil Harz oder einen anderen Kleber aufweisen, um die Fasern miteinander zu verbinden.

Die Fasern können alternativ auch unverbunden sein. Hierunter wird verstanden, dass die Fasern ohne Aufwendung einer nennenswerten Kraft voneinander gelöst werden können. Die Faserlage kann auch eine Kombination von verbundenen und unverbundenen Fasern aufweisen. Mindestens eine Seite der Faserlage ist in die erfindungsgemäß eingesetzten auf Polycarbonat basierenden Zusammensetzungen als Matrixmaterial eingebettet. Hierunter wird verstanden, dass die Faserlage zumindest einseitig, vorzugsweise beidseitig von der auf Polycarbonat basierenden Zusammensetzung umgeben ist. Der äußere Rand des Faserverbundwerkstoffes wird bevorzugt durch die Matrix aus Polycarbonat basierter Zusammensetzung gebildet.

Die Zahl der Faserlagen in einer Lage Faserverbundwerkstoff ist grundsätzlich nicht beschränkt. Es können daher auch zwei oder mehr Faserlagen übereinander angeordnet werden. Zwei übereinanderliegende Faserlagen können dabei jeweils einzeln in das Matrixmaterial eingebettet sein, so dass sie jeweils beidseitig von dem Matrixmaterial umgeben sind. Weiterhin können zwei oder mehr Faserlagen auch unmittelbar übereinander liegen, so dass ihre Gesamtheit von dem Matrixmaterial umgeben wird. In diesem Fall können diese zwei oder mehr Faserlagen auch als eine dicke Faserlage angesehen werden.

Mehrschichtverbundwerkstoffe

Mehrschichtverbundwerkstoffe weisen mindestens zwei, bevorzugt mindestens drei übereinander liegende Lagen Faserverbundwerkstoff umfasst, wobei im Falle von drei Verbundwerkstofflagen diese relativ zueinander definiert werden als zwei außenliegende Lagen Faserverbundwerkstoff und mindestens eine innenliegende Lage Faserverbundwerkstoff.

Bevorzugtes Fasermaterial in den Lagen Faserverbundwerkstoff sind Endlosfasern, die bevorzugt unidirektional ausgerichtet sind.

Im Falle von Endlosfasern als Fasermaterial können die innenliegenden Lagen Faserverbundwerkstoff im

Wesentlichen gleich orientiert und ihre Orientierung relativ zu den außenliegenden Lagen Faserverbundwerkstoff um 30° bis 90° rotiert sein, wobei die Orientierung einer Lage Faserverbundwerkstoff durch die Orientierung der darin enthaltenen, unidirektional ausgerichteten Fasern bestimmt wird.

In einer bevorzugten Ausführungsform sind die Lagen alternierend angeordnet. Hierbei liegen die äußeren Lagen in einer 0° Orientierung vor. Als besonders praxisgerecht hat es sich erwiesen, wenn die innenliegenden Lagen Faserverbundwerkstoff gleich orientiert sind und ihre Orientierung relativ zu den außenliegenden Lagen Faserverbundwerkstoff um 90° rotiert ist. "Alternierend" heißt, dass die innenliegenden Lagen jeweils um einen Winkel von 90 ° oder einem Winkel von 30° bis 90° abwechselnd angeordnet sind. Die äußeren Lagen liegen in einer 0° Orientierung jeweils vor. Die Winkel können pro Lage jeweils von 30° bis 90° variiert werden.

Eine weitere bevorzugte Ausführungsform ist, dass mindestens ein Teil der Lagen die gleiche Orientierung aufweist und mindestens ein anderer Teil der Lagen um 30° bis 90° rotiert ist. Hierbei liegen die äußeren Lagen in einer 0° Orientierung vor.

Eine weitere bevorzugte Ausführungsform ist, dass die innenliegenden Lagen die gleiche Orientierung aufweisen und ihre Orientierung relativ zu den außenliegenden Lagen Faserverbundwerkstoff um 30° bis 90° rotiert ist und die äußeren Lagen dazu in einer 0° Orientierung vorliegen.

Im Falle von Geweben erfolgt ein Stapeln der Lagen Faserverbundwerkstoffe abwechselnd in Kettrichtung (0°) und Schussrichtung (90°) bzw. in den oben angegebenen Winkeln.

Die Faser- bzw. Mehrschichtverbundwerkstoffe können einen metallischen Klang aufweisen. Sie weisen ferner den Vorteil auf, dass sie sich kostengünstig herstellen lassen und durch den darin verwendeten Kunststoff äußerst leichtgewichtig sind. Vorteilhaft an den Faser- bzw. Mehrschichtverbundwerkstoffen ist ferner, dass die Gestaltung, beispielsweise eines Gehäuseteils, durch die Thermoformbarkeit der Verbundwerkstoffe besonders einfach und flexibel erfolgen kann.

Grundsätzlich kann der erfindungsgemäße Mehrschichtverbundwerkstoff neben den Lagen Faserverbundwerkstoff auch noch eine oder mehrere weitere Lagen enthalten. Beispielhaft seien hier weitere Lagen aus Kunststoff, der gleich oder verschieden von der in den Lagen Faserverbundwerkstoff verwendeten Kunststoffmatrix sein kann, genannt. Diese Kunststofflagen können insbesondere auch Füllstoffe, die von den erfindungsgemäß vorgesehenen Fasermaterialien verschieden sind, enthalten. Ferner können auch Klebstoff-, Gewebe-, Vlies- oder Oberflächenvergütungslagen, beispielsweise Lackschichten, im erfindungsgemäßen Mehrschichtverbundwerkstoff enthalten sein. Diese weiteren Lagen können zwischen innen- und außenliegenden Lagen Faserverbundwerkstoff, zwischen mehreren innenliegenden Lagen Faserverbundwerkstoff und/oder auf der außenliegenden Lage Faserverbundwerkstoff, die sich auf der zur Deckschicht D abgewandten Seite befindet, enthalten sein. Vorzugsweise sind die außenliegenden und die mindestens eine innenliegende Lage Faserverbundwerkstoff jedoch derart miteinander verbunden, dass keine weiteren Lagen dazwischenliegen.

Die einzelnen Lagen Faserverbundwerkstoff können im Wesentlichen gleich oder unterschiedlich aufgebaut und/oder orientiert sein.

Unter einem im Wesentlichen gleichen Aufbau der Lagen Faserverbundwerkstoff wird im Rahmen der Erfindung verstanden, dass mindestens ein Merkmal aus der Gruppe chemische Zusammensetzung, Faservolumengehalt und Schichtdicke gleich ist.

Unter chemischer Zusammensetzung wird die chemische Zusammensetzung der Kunststoffmatrix des Faserverbundwerkstoffs und/oder die chemische Zusammensetzung des Fasermaterials wie Endlosfasern verstanden.

Gemäß einer bevorzugten Ausführungsform der Erfindung sind die außenliegenden Lagen Faserverbundwerkstoff in Bezug auf ihre Zusammensetzung, ihren Faservolumengehalt und ihre Schichtdicke im Wesentlichen gleich aufgebaut.

Bevorzugt weist der Mehrschichtverbundwerkstoff eine Gesamtdicke von 0,4 bis 2,5 mm, vorzugsweise 0,7 bis 1,8 mm, insbesondere 0,9 bis 1,2 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden Lagen Faserverbundwerkstoff eine Gesamtdicke von 200 $\mu$m bis 1200 $\mu$m, bevorzugt 400 $\mu$m bis 1000 $\mu$m, besonders bevorzugt 500 $\mu$m bis 750 $\mu$m aufweist.

Vorteilhaft im Rahmen der Erfindung ist es ferner, wenn die Dicke jeder einzelnen der beiden außenliegenden Lagen Faserverbundwerkstoff jeweils 100 bis 250 $\mu$m, bevorzugt, 120 $\mu$m bis 230 $\mu$m, besonders bevorzugt 130 $\mu$m bis 180 $\mu$m beträgt.

Erfindungsgemäß bevorzugte Faserverbundwerkstofflagen weisen einen Faservolumengehalt von $\geq$ 30 Vol.-% und $\leq$ 60 Vol.-%, vorzugsweise $\geq$ 35 Vol.-% und $\leq$ 55 Vol.-%, besonders bevorzugt von $\geq$ 37 Vol.-% und $\leq$ 52 Vol.-% auf. Ein Faservolumengehalt von über 60 Vol.-% führt zu einer Verschlechterung der mechanischen Eigenschaften des Faserverbundwerkstoffs. Ohne an wissenschaftliche Theorien gebunden sein zu wollen, scheint dies darauf zurückführbar zu sein, dass die Fasern bei der Imprägnierung bei derartig hohen Faservolumengehalten nicht mehr ausreichend

benetzt werden können, was zu einer Zunahme an Lufteinschlüssen und zu einem vermehrten Auftreten von Oberflächendefekten im Faserverbundwerkstoff und signifikanter Reduktion der mechanischen Belastbarkeit führt.

Bei einer Ausführungsform des Mehrschichtverbundwerkstoffs liegt der Volumengehalt des Fasermaterials am Gesamtvolumen des Mehrschichtverbundwerkstoffs im Bereich von 30 bis 60 Vol.-%, bevorzugt im Bereich 40 bis 55 Vol.-%.

Gemäß einer Ausführungsform der Erfindung weisen die außenliegenden Lagen Faserverbundwerkstoff einen Faservolumengehalt von höchstens 50 Vol.-%, vorzugsweise höchstens 45 Vol.-%, insbesondere höchstens 42 Vol.-% auf.

Gemäß einer besonderen Ausführungsform der Erfindung weisen die außenliegenden Lagen Faserverbundwerkstoff einen Faservolumengehalt von mindestens 30 Vol.-%, vorzugsweise mindestens 35 Vol.-%, insbesondere mindestens 37 Vol.-% auf.

Gemäß einer weiteren besonderen Ausführungsform der Erfindung weisen die außenliegenden Lagen Faserverbundwerkstoff einen geringeren Volumengehalt an Fasern, bezogen auf das Gesamtvolumen der Lage Faserverbundwerkstoff, auf als die mindestens eine innenliegende Lage Faserverbundwerkstoff.

Die innenliegenden Lagen Faserverbundwerkstoff können einen Faservolumengehalt von 40 bis 60 Vol.-%, bevorzugt 45 bis 55 Vol.-%, besonders bevorzugt 48 bis 52 Vol.-% bezogen auf das Gesamtvolumen der Lage Faserverbundwerkstoff aufweisen.

Unter Vol.-% wird hier der Volumenanteil (% v/v) bezogen auf das Gesamtvolumen der Lage Faserverbundwerkstoff verstanden.

Herstellung der Faserverbundwerkstoffe und der Mehrschichtverbundwerkstoffe

Die Herstellung der erfindungsgemäß als Substartschicht S zu verwendenden Faserverbundwerkstoffe bzw. Mehrschichtverbundwerkstoffe sind dem Fachmann bekannt und beispielsweise in EP3464471 A1 und EP3055348 B1beschrieben.

<u>Beschreibung der Deckschicht D</u>

Das Material der Deckschicht D umfasst das aromatische Polycarbonat, welches auch in der Substratschicht S enthalten ist als Blend mit einer Polyesterkomponente P, die Poly(cyclo)alkylenterephthalate und Polyalkylennaphthalate oder Mischungen dieser Polyester gemäß den Ausführungen des Anspruchs 1 umfasst.

Bei diesen Polyestern handelt es sich um Reaktionsprodukte aus Therephtahlsäure bzw. Naphthalin-2,6-dicarbonsäure oder ihren reaktionsfähigen Derivaten, wie beispielsweise den Dimethylestern dieser beiden Säuren, und aliphatischen bzw. cycloaliphtiaschen Diolen.

Zur Herstellung der Polyalkylenterephthalate und -naphthalate kommen bevorzugt (ar)aliphatische Diole mit 3 bis 12 C-Atomen zum Einsatz, wie beispielsweise: Ethylenglycol, 1,4-Butandiol, Propandiol-1,3, 2-Ethylpropandiol-1,3, Neopentylglykol, Pentandiol-1,5, Hexandiol-1,6, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-β-hydroxyethoxy-phenyl)-propan und/oder 2,2-Bis-(4-hydroxypropoxyphenyl)-propan. Bevorzugt sind Ethylenglycol und 1,4-Butandiol.

Zur Herstellung der Polycycloalkylenterephthalate kommen bevorzugt cycloaliphatische Diole mit 6 bis 21 C-Atomen zum Einsatz, wie beispielsweise: Cyclohexan-dimethanol-1,4, 2,2-Bis-(4-hydroxycyclohexyl)-propan und/oder 2,2,4,4-tetramethyl-1,3cyclobutandiol. Bevorzugt sind Cyclohexan-dimethanol-1,4 und 2,2,4,4-tetramethyl-1,3cyclobutandiol und deren Mischungen.

Besonders bevorzugte Polyalkylenterephthalate bzw. -naphthalate enthalten mindestens 80 Gew.-%, vorzugsweise mindestens 90 Gew.-%, bezogen auf die Dicarbonsäurekomponente Terephthalsäurereste bzw. Naphthalin-2,6-dicarbonsäurereste und mindestens 80 Gew.-%, vorzugsweise mindestens 90 mol-%, bezogen auf die Diolkomponente Ethylenglykol- und/oder Butandiol-1,4-Reste.

Besonders bevorzugte Polycycloalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Cyclohexan-dimethanol-1,4- und/oder 2,2,4,4-tetramethyl-1,3cyclobutandiol -Reste.

Die bevorzugten Poly(cyclo)alkylenterephthalate bzw. Polyalkylennaphthalate können neben Terephthalsäureresten bzw. Naphthalin-2,6-dicarbonsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate bzw. -naphthalate können neben Ethylenglykol- bzw. Butandiol-1,4-Resten bis zu 20 mol-%, vorzugsweise bis zu 10 mol-%, andere (ar)aliphatische Diole mit 3 bis 12 C-Atomen enthalten, z.B. Reste von Propandiol-1,3, 2-Ethylpropandiol-1,3, Neopentylglykol, Pentandiol-1,5, Hexandiol-1,6, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-β-hydroxyethoxy-phenyl)-propan und 2,2-Bis-(4-hydroxypropoxyphenyl)-propan.

Die bevorzugten Polycycloalkylenterephthalate können neben Cyclohexan-dimethanol-1,4 und/oder 2,2,4,4-tetramethyl-1,3cyclobutandiol-Resten bis zu 20 mol-%, vorzugsweise bis zu 10 mol-%, andere cycloaliphatische Diole mit 6 bis 21 C-Atomen enthalten, z.B. Reste von 2,2-Bis-(4-hydroxycyclohexyl)-propan.

Die oben genannten Polyester können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Ganz besonders bevorzugte Polyalkylenterephthalate basieren allein auf Terephthalsäure oder deren reaktionsfähigen Derivaten (z.B. deren Dialkylestern) und Ethylenglykol oder Butandiol-1,4.

Ganz besonders bevorzugte Polycycloalkylenterephthalate, basieren allein auf Terephthalsäure oder deren reaktionsfähigen Derivaten (z.B. deren Dialkylestern) und Cyclohexan-dimethanol-1,4 und/oder 2,2,4,4-tetramethyl-1,3cyclobutandiol.

Ganz besonders bevorzugte Polyalkylennaphthalate basieren allein auf Naphthalin-2,6-dicarbonsäure oder deren reaktionsfähigen Derivaten (z.B. deren Dialkylestern) und Ethylenglykol oder Butandiol-1,4.

Die Poly(cyclo)alkylenterephthalate und Polyalkylennaphthalate lassen sich nach bekannten Methoden herstellen (s. z.B. Kunststoff-Handbuch, Band VIII, S. 695 ff., Carl-Hanser-Verlag, München 1973).

Der Anteil der Polyesterkomponente P beträgt ganz besonders bevorzugt ≥ 30 Gewichts-%, noch mehr bevorzugt ≥ 35 Gewichts-%, bezogen auf das Gesamtgewicht des Materials der Deckschicht D, sofern Polyesterkomponente P gemäß Variante i) mindestens ein Polycycloalkylenterephthalat umfasst oder daraus besteht.

Der Anteil der Polyesterkomponente P beträgt ganz besonders bevorzugt ≥ 30 Gewichts-%, noch mehr bevorzugt ≥ 35 Gewichts-%, bezogen auf das Gesamtgewicht des Materials der Deckschicht D, sofern Polyesterkomponente P gemäß Variante ii) mindestens ein Polyalkylenterephthalat umfasst oder daraus besteht.

Der Anteil der Polyesterkomponente P beträgt darüberhinaus bevorzugt ≥ 45 Gewichts-%, am meisten bevorzugt ≥ 50 Gewichts-%, bezogen auf das Gesamtgewicht des Materials der Deckschicht D, sofern Polyesterkomponente P gemäß Variante ii) Polyethylentherephthalat umfasst oder daraus besteht.

Der Anteil der Polyesterkomponente P beträgt für alle Ausführungsformen bevorzugt ≤ 60, besonders bevorzugt ≤ 55 Gewichts-%, bezogen auf das Gesamtgewicht des Materials der Deckschicht D.

Das Material der Deckschicht kann weitere Blendpartner enthalten. Als Blendpartner lassen sich Polyamide, von den oben beschriebenen Polyestern verschiedene Polyester, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Zusätzlich sind optional bis zu 10,0 Gew.-%, bevorzugt 0,10 bis 8,0 Gew.-%, besonders bevorzugt 0,2 bis 3,0 Gew.-%, bezogen auf das Gesamtgewicht des Materials der Deckschicht D, sonstige übliche Additive enthalten. An dieser Stelle sei auf die Ausführungen zu den Additiven unter der Beschreibung der Substratschicht verwiesen.

Die Deckschicht D weist eine Dicke ≤ 500 μm, bevorzugt ≤ 300 μm, besonders bevorzugt ≤ 200 μm, ganz besonders bevorzugt ≤ 100 μm auf.

Die Deckschicht D weist eine Dicke ≥ 5 μm, bevorzugt ≥ 10 μm auf.

<u>Beschreibung der Lackschicht L</u>

Lack ist die Bezeichnung für einen flüssigen oder auch pulverförmigen Beschichtungsstoff, der dünn auf Gegenstände aufgetragen wird und durch chemische oder physikalische Vorgänge (zum Beispiel Verdampfen des Lösungsmittels) zu einem durchgehenden, festen Film aufgebaut wird.

Als Lackschicht L kommen alle dem Fachmann bekannten Lacke zur Verwendung auf Polycarbonat-haltigen Untergründen in Frage. In einer bevorzugten Ausführungsform handelt es sich um einen Lack für den Bereich der Automobilanbauteillackierung, wobei die Lackschicht L bevorzugt eine oder mehrere der folgenden Schichten umfasst:

- wenigstens eine Grundierungsschicht G,
- wenigstens eine Basislackschicht B
- wenigstens eine Klarlackschicht K.

Unter einer Grundierungsschicht werden im Automobilsektor Beschichtungen verstanden, die die Haftfestigkeit

von Lacken auf Kunststoffteilen, beispielsweise auch nach Bewitterung, optimiert. So werden die Kunststoffteile meist mit einer Grundierung, auch Primer genannt, beschichtet, bevor die farb- und effektgebende Lackschicht oder -schichten appliziert werden. Neben der Haftfestigkeit soll die Grundierung beispielsweise auch zum Steinschlagschutz beitragen. Weiterhin kann eine Grundierung durch Zusatz von entsprechenden Additiven wie Leitrußen leitfähig ausgestaltet werden, so dass die anschließend applizierten Schichten mittels elektrostatischer Spritzapplikation und damit mit besonders hoher Transfereffizienz aufgebracht werden können.

Basislack (Basislackschicht) ist eine Bezeichnung für einen in der Automobil-Lackierung üblichen farbgebenden Zwischenbeschichtungsstoff.

Ein Klarlack (Klarlackschicht) schützt den Basislack vor Witterungseinflüssen, sowie mechanischen und chemischen Angriffen.

Die Anzahl an aufzubringenden Basislackschichten und Klarlackschichten ist jeweils nicht auf eine Schicht begrenzt. Es ist es auch möglich, zwei, drei, vier oder mehr Basislackschichten aufzubringen bzw. mehrfach abwechselnd Basis- und Klarlackschichten aufzubringen. Die einzelnen Schichten können dabei jeweils vollständig getrocknet oder nur teilweise getrocknet werden, bevor die nächste Schicht aufgetragen wird. Letzteres wird auch als "nass in nass"-Applikation bezeichnet. Auch bei der Überlackierung mit einem Klarlack ist die Anzahl der Schichten nicht auf eine begrenzt.

Zur Herstellung der Lackschicht L können alle dem Fachmann bekannten, wässrigen oder auf organischen Lösungsmittel basierenden Primer, Basis- und Decklacke verwendet werden.

Beispiele für erfindungsgemäß verwendbare Grundierungsschichten G finden sich z.B. in EP-B 1226218 oder der zum Zeitpunkt der Anmeldung der vorliegenden Erfindung zum Patent noch unveröffentlichten Europäischen Patentanmeldung mit der Anmeldenummer 18213389.2.

Eine Beschreibung erfindungsgemäß verwendbarer Basislackschichten B findet sich z.B. in den Schriften US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127, DE-A-28 18 100 und WO-A 2017/202692.

Klarlackschichten K, die erfindungsgemäß verwendet werden können, sind beispielsweise in der EP-A 3445827 und WO-A 2017/202692 beschrieben.

Ein weiterer Gegenstand der vorliegenden Erfindung ist ein Verfahren zur Herstellung eines Schichtenverbundes, umfassend den Schritt:

I) Verbinden einer Substratschicht S mit einer Deckschicht D,
wobei die Substratschicht S und die Deckschicht D den vorangegangenen Beschreibungen entspricht.

Ein weiterer Gegenstand ist ein Verfahren, wie zuvor beschrieben, umfassend weiterhin den Schritt:
II) Auftragen wenigstens einer Lackschicht auf die der Substratschicht S abgewandten Seite der Deckschicht D in dem nach Schritt I) erhaltenen Schichtenverbund.

Die erfindungsgemäßen Schichtenverbunde finden Anwendung zur Herstellung beispielsweise von Automobilanbauteilen.

Weitere Gegenstände der vorliegenden Erfindung sind daher die Verwendung der erfindungsgemäßen Schichtenverbunde zur Herstellung von Automobilanbauteilen, sowie die daraus erhältlichen Automobilanbauteile selbst.

Beispiele

Die vorliegende Erfindung wird durch die nachfolgenden Beispiele näher erläutert, ohne jedoch darauf beschränkt zu sein.

**Herstellung des Substrats S:**

Für die Versuche wurden Platten eines Verbundwerkstoffs aus Polycarbonat und Kohlefaser (im Folgenden als Komposit bezeichnet) mit den Abmaßen 350 x 350 $mm^2$ als Substratschicht verwendet. Die Komposite wurden von der Covestro Thermplast Composite GmbH (CTC) aus 8 Lagen UD-Tape hergestellt, wobei die UD-Tapes selbst aus 40-45 Vol.% unidirektional orientierter Kohlefaser des Typs Mitsubishi TRH-50 60M und 60-55 Vol.% Polycarbonat-Matrix (Typ Makroion® 3107 in Farbe 901510) aufgebaut waren. Eine allgemeine Beschreibung der Herstellung ist beispielsweise in WO 2018/007335 A1 zu finden.

Der Lagenaufbau wurde, bezogen auf die Winkelorientierung der Kohlefasern, in den einzelnen UD-Tape-Lagen so gewählt, dass eine quasi-isotrope Verstärkung des Komposits vorlag (0°/ 45° / -45° / 90° / 90° / -45° / 45° / 0°).

**Herstellung der Deckschicht D:**

Es wurden thermoplastische Formmassen enthaltend die Komponenten A bis E mit den in Tabelle 1 angegebenen Formulierungen auf einem Doppelwellenextruder ZSK25 der Fa. Coperion, Werner und Pfleiderer (Deutschland) bei Schmelzetemperaturen von 250 °C bis 300 °C hergestellt. Aus den erhaltenen Granulaten wurden anschließend Folien mit einer Dicke von etwa 100 μm extrudiert. Dazu wurde das entsprechende Material nach Vortrocknung (4 h, 85 - 90 °C) auf dem Extruder (Drehzahl ca. 50/min, Massetemperatur 265 °C (Einträge 1-16 in Tabelle 1) und 300 °C (Eintrag 17 in Tabelle 1)) aufgeschmolzen und über eine 450 mm-Breitschlitzdüse auf ein Walzwerk extrudiert.

**Verwendete Komponenten in der Deckschicht D:**

Komponente A: lineares Bisphenol-A-Polycarbonat mit einem mittleren Molekulargewicht Mw von ca. 31.000 g/mol und einer Erweichungstemperatur (VST/B 120 nach ISO 306:2014-3) von 150 °C, welches keinen UV-Absorber enthält. Die Schmelze-Volumenfließrate (MVR) nach ISO 1133:2012-03 betrug 6,0 $cm^3$/(10 min) bei 300 °C und 1.2 kg Belastung.

Komponente B1: Polybutylenterephthalat (PBT) mit einer melt-mass flow rate (MFR) von 9.0g/10min bis 14.5g/10 min gemessen nach DIN EN ISO 1133 bei einer Temperatur von 250 °C und mit einer Belastung von 2.16 kg.

Komponente B2: Polyethylenterephthalat (PET) mit einer intrinsischen Viskosität von 0.623 dl/g. Die spezifische Viskosität wird gemessen in Dichloressigsäure in einer Konzentration von 1 Gew.-% bei 25 °C. Die intrinsische Viskosität wird aus der spezifischen Viskosität gemäß nachstehender Formel berechnet:

$$\text{Intrinsische Viskosität} = \text{Spezifische Viskosität} \cdot 0.0006907 + 0.063096$$

Komponente B3: Polyester auf Basis von Terephthalsäure, Cyclohexandimethanol und 2,2,4,4-tetramethyl-1,3-cyclobutandiol mit einer inhärenten Viskosität von 0.69 - 0.75 dl/g gemessen in einer 60/40-Mischung (Gew.-%/Gew.-%) von Phenol/Tetrachloroethan bei 25 °C in einer Konzentration von 0.5 g / 100 ml.

Komponente B4: Polyethylennaphthalat (PEN).

Komponente C: Schlagzähmodifikator mit Kern-Schale Morphologie, einem StyrolButadien-Kautschuk-Kern und einer aufgepfropften Schale aus Methylmethacrylat-StyrolCopolymer, einem Butadien-Anteil von 68 % - 72 % und einer Kautschuk-Partikelgrößenverteilung zwischen 130 nm und 160 nm.

Komponente D1: Talk mit einem mittleren Partikeldurchmesser $d_{50}$ von 1.2 μm, gemessen mittels Sedigraph und mit einem $Al_2O_3$-Gehalt von 0.5 Gew.-%.

Komponente D2: Irganox 1076, Thermostabilisator, BASF SE

Komponente D3: Phosphorige Säure $H_3PO_3$ als Feststoff.

Komponente E: Pentaerythrityl-Tetrastearat als Gleit-/Entformungsmittel.

Anschließend wurden die Komposite (Substrat) auf einer statischen Laborpresse (Typ Joos LAP 100) doppelseitig mit den zu untersuchenden Folien (Deckschicht D) laminiert. Dabei wurden ein polierter Einsatz ("Hochglanzstempel") und ein externes Trennmittel (Frekote®, Firma Henckel) verwendet.

**Herstellung der Lackschicht L**

**Verwendete Substanzen zur Herstellung der Grundier-, Basislack- und Klarlackschicht:**

Die Substanzen wurden, soweit nicht anders erwähnt, ohne weitere Reinigung oder Vorbehandlung eingesetzt.

Additol XL 250, Allnex Resins Germany GmbH, DE, anionisches Netz- und Dispersionsmittel für Pigmente

Aerosil® R 972, Evonik Resource Efficiency GmbH, DE, pyrogene Kieselsäure Mattierungsmittel

Aquatix 8421, BYK Chemie GmbH, DE, Rheologie-modifizierende Wachsemulsion

Bayferrox® 318 M, Lanxess AG, DE, Eisenoxidpigment

Bayhydrol® U 2757, Covestro AG, DE, aliphatische, anionische hydroxyfunktionelle Polyurethan-Dispersion auf Basis einer Mischung von aromatischem Polyesterdiol und eines Polycarbonatdiols, co-lösungsmittelfrei. Bindemittel zur Herstellung von wasserverdünnbaren 2K-PUR-Lacken, ca. 52%ig in Wasser/N,N-Dimethylethanolamin, Hydroxylgehalt ca. 1,8% (rechnerisch) bezogen auf den nichtflüchtigen Anteil (1 g/1 h/125 °C) nach DIN EN ISO 3251, Angaben gemäß Datenblatt Ausgabe 2016-09-13.

Bayhydrol® UH 2606, Covestro AG, DE, aliphatische, polycarbonathaltige anionische Polyurethandispersion, co-lösungsmittelfrei. Bindemittel zur Herstellung von wasserverdünnbaren Beschichtungen für Kunststoffsubstrate und Holzwerkstoffe, ca. 35 %ig in Wasser, neutralisiert mit N-Ethyldiisopropylamin (als Salz gebunden) im Verhältnis: ca. 35 : 64 : 1, Angaben gemäß Datenblatt Ausgabe 2016-09-13.

Bayhydrol® UA 2856 XP, Covestro AG, DE, Aliphatische, acrylatmodifizierte Polyurethandispersion Bindemittel für wässrige, luft- und ofentrocknende Basislacke für 2-Schicht-Fahrzeuglackierung, Kunststofflackierung, Autoreparaturlackierung, Industrielackierung sowie für niedertemperaturtrocknende Steinschlagfunktionsschichten.

Viskosität <100 mPa s bei 23 °C (ISO 3219/A.3), Angaben gemäß Datenblatt Ausgabe 2016-03-03

Bayhydur® XP 2655, Covestro AG, DE, hydrophiles Polyisocyanat auf Basis von Trimerisaten des Hexamethylendiisocyanats, NCO-Gehalt 20,8% (ISO 11909), Viskosität 3500 mPa s bei 23 °C (ISO 3219/A.3), Angaben gemäß Datenblatt Ausgabe 2017-06-01.

Baysilone® Paint Additive OL 17, OMG Borchers, DE, polyethermodifiziertes Polysiloxan (Verlaufsadditiv)

Blanc fixe micro, Sachtleben Chemie GmbH, DE, Füllstoff

Borchigel® PW 25, OMG Borchers, DE, Polyurethanverdicker

Butylacetat (Essigsäure-n-butylester), Azelis Deutschland GmbH , Lösungsmittel

Butylglykol (2-Butoxyethanol), BASF SE, DE, Lösungsmittel

Byk® 348, BYK Chemie GmbH, DE, Silikontensid zur Verbesserung der Untergrundbenetzung

Desmodur® ultra N 3390, Covestro AG, DE, Aliphatisches Polyisocyanat (Trimerisaten des Hexamethylendiisocyanats). Als Härterkomponente für lichtechte Polyurethan-Lacksysteme.

NCO-Gehalt 19,6% (ISO 11909), Viskosität 500 mPa s bei 23 °C (ISO 3219/A.3), Angaben gemäß Datenblatt Ausgabe 2018-11-14.

Desmodur® ultra N 3600, Covestro AG, DE, Polyisocyanat auf Basis von Trimerisaten des Hexamethylendiisocyanats, NCO-Gehalt 23,0% (ISO 11909), Viskosität 1200 mPa s bei 23 °C (ISO 3219/A.3), Angaben gemäß Datenblatt Ausgabe 2017-06-01.

Desmophen® 670 BA, Covestro AG, DE, schwach verzweigter, hydroxylgruppenhaltiger Polyester für die Herstellung wetterfester, elastischer Lackierungen.

Viskosität 3000 mPa s bei 23 °C (ISO 3219/A.3), Angaben gemäß Datenblatt Ausgabe 2018-03-01

Diacetonalkohol (DAA), Acros Organics, Lösungsmittel

Dibutylzinndilaurat, ISO-ELEKTRA - Elektrochemische Fabrik GmbH, Katalysator

N,N-Dimethylethanolamin (DMEA), Sigma Aldrich Chemie, DE, Neutralisationsmittel

Dispex® Ultra FA 4436, BASF SE, DE, Dispergierhilfsmittel

Finntalc® M-15 AW, Mondo Minerals B.V., NL, Talkum

1-Methoxy-2-propylacetat (MPA), BASF SE, DE, Lösungsmittel

R-KB-2, Sachtleben Chemie GmbH, DE, Weißpigment

Setalux® DA 365 BA/X, Allnex Resins Germany GmbH, DE, funktionelles acrylatpolymerhaltiges Bindemittel

Setaqua 6801, Allnex Belgium SA/NV, nichtfunktionelles acrylathaltiges Copolymer

Solvent Naphtha 100 (Schwerbenzol), Azelis Deutschland GmbH, Lösungsmittel

Stapa Hydrolan 2156 Nr. 55900/G Aluminium, Eckart GmbH, DE, Aluminium-Pigmentpaste

Surfynol® 104 E, Evonik Resource Efficiency GmbH, DE, nichtionisches Benetzungs-, Entschäumungs- und Dispergierhilfsmittel

Tinuvin® 292 und Tinuvin® 1130, BASF SE, DE, UV-Stabilisatoren

**Lackformulierungen:**

**Primer** (wässriger, zweikomponentiger Kunststoffprimer PCO-0148-PS gemäß der von der Covestro Deutschland AG veröffentlichten Startformulierung (Edition 2016-09-13)):
Zur Herstellung der Komponente 1 wurden zunächst die Bindemittel vorgelegt und anschließend die weiteren Bestandteile in der angegebenen Reihenfolge eingewogen, mit Glasperlen (2,85 - 3,45 mm) 1:1 (nach Volumen) versetzt und 30 Minuten mit einem Laborschüttler Skandex BA-S20 der Firma Lau angerieben. Anschließend wurden die Glasperlen abgesiebt. Unter Rühren mit einem Dissolver (Dissolverscheibe 5 cm, bei 800 U/min) wurde anschließend der Verdicker langsam zudosiert und weitere 5 Minuten eingerührt. Die Komponente 1 wurden dann mit demineralisiertem Wasser auf eine Auslaufzeit im 4 mm DIN Becher von 25 bis 30 s eingestellt.

Kurz vor Applikation wurde Komponente 2 unter Rühren mit einem Flügelrührer (5 min, 700 U/min) eingearbeitet und der gebrauchsfertige Primer innerhalb von 30min appliziert.

*Tabelle 1*

| **2-Komponenten Primer für Kunststoffe** | **Gew.%** |
|---|---|
| **Komponente 1** | |
| *Bindemittel:* | |
| Bayhydrol® U 2757 | 20.5 |
| Bayhydrol® UH 2606 | 30.4 |
| | |
| *Bestandteile:* | 0.4 |
| Dispex® Ultra FA 4436 | 0.3 |
| Surfynol® 104 E | 0.2 |
| Byk® 348 | 7.4 |
| R-KB-2 | 11.1 |
| Blanc fixe micro | 3.7 |
| Finntalc® M-15 AW | 0.2 |
| Bayferrox® 318 M | 0.6 |
| Aerosil® R 972 | 0.2 |
| | |
| *Verdicker:* | |
| Borchigel® PW 25 | 0.2 |

(fortgesetzt)

| 2-Komponenten Primer für Kunststoffe | Gew.% |
|---|---|
| **Komponente 1**<br><br>Demineralisiertes Wasser | <br><br>20.5 |
| **Komponente 2**<br>Desmodur® ultra N 3600 / Bayhydur® XP 2655 (70:30), 75% in MPA | <br>4.5 |

**Wasserbasierter Metallic-Basislack** (einkomponentiger Hydrobasislack HEBE 4134/1 gemäß der von der Covestro Deutschland AG veröffentlichten Startformulierung (Edition 2016-08-23):
Zunächst wurde die Metallic-Paste (Tabelle 2, Teil 3) in einem separaten Gefäß angesetzt. Dazu wurden alle Bestandteile in Tabelle 2, Teil 3, in der angegebenen Reihenfolge unter Rühren mit einem Propeller-Rührer gemischt. Anschließend wurde der pH Wert getestet (Ziel: pH 8.0-8.5) und, falls notwendig, mit DMEA eingestellt. Nach erneutem Rühren für 30min bei ca. 10.5 m/s (maximale Erwärmung auf 50°C) war die Paste gebrauchsfertig.

Für den Metallic-Basislack wurden Teil 1 und Teil 2 aus Tabelle 2 mit einem Propeller-Rührer bei ca. 5.2 m/s vermischt. Anschließend wurde Teil 3 zugegeben und für 30min bei etwa 10.5 m/s eingerührt. Zuletzt wurde Teil 4 zugegeben und erneut 5 min bei 5.2 m/s eingerührt. Vor der Applikation wurde der pH Wert des Lacks mit DMEA auf 8.0-8.5 eingestellt. Mit demineralisiertem Wasser wurde die Auslaufzeit auf 40s gemäß DIN cup 4 mm eingestellt und der Lack über ein 56μm Sieb abfiltriert.

*Tabelle 2*

| Wasserbasierter Metallic-Basislack | Gew.% |
|---|---|
| **Teil1 (Bindemittel)**<br>Setaqua 6801, f.s. (Nuplex Resins bv, Netherlands) 26.66<br>Bayhydrol® UA 2856 XP<br>Bayhydrol® UH 2606 | <br>26.66<br>13.71<br>13.71 |
| **Teil 2**<br>Demineralisiertes Wasser<br>Butylglykol<br>DMEA, 10% in Wasser | <br>8.00<br>7.01<br>3.94 |
| **Teil 3 (Metallic Paste mit folgender Zusammensetzung)**<br>Butylglykol<br>Setaqua B E 270<br>Additol XL 250<br>Stapa Hydrolan 2156 Nr. 55900/G Aluminium<br>DMEA | **12.59**<br>(41.88)<br>(2.89)<br>(4.36)<br>(50.64)<br>(0.23) |
| **Teil 4** | |
| Aquatix 8421<br>Demineralisiertes Wasser | 4.48<br>9.90 |

**Klarlack** (lösungsmittelbasierter Klarlack RR 4822 gemäß der von der Covestro Deutschland AG veröffentlichten Startformulierung (Edition 2015-09-01):
Zur Herstellung der Komponente 1 wurden zunächst die Bindemittel vorgelegt. Unter Rühren mit einem Dissolver (Dissolverscheibe 5 cm, bei 800 U/min) alle weiteren Bestandteile in Tabelle 3, Teil 1, in der angegebenen Reihenfolge zudosiert und weitere 5-10 Minuten eingerührt.

Kurz vor Applikation wurde Komponente 2 unter Rühren mit einem Flügelrührer (5 min, 700 U/min) eingearbeitet

und der gebrauchsfertige Klarlack innerhalb von 30min appliziert.

*Tabelle 3*

| Klarlack | Gew.% |
|---|---|
| **Teil 1** | |
| Desmophen® 670 BA | 19.4 |
| Setalux® DA 365 BA/X | 23.8 |
| Baysilone® Paint Additive OL 17, 10 % in Butylacetat | 0.5 |
| Dibutylzinndilaurat, 1 % in Butylacetat | 1,0 |
| Tinuvin® 292, 10 % in MPA | 1.0 |
| Tinuvin® 1130, 10 % in MPA | 4.9 |
| 1-Methoxy-2-propylacetat (MPA) | 2.5 |
| Solvent Naphtha 100 | 11.1 |
| Diacetonalkohol (DAA) | 11.1 |
| | 5.5 |
| **Teil 2** | |
| Desmodur® ultra N 3390 | 20.1 |

**Lackierung der Substrat-Deckschicht-Laminate**

Das Vorgehen bei der Herstellung der Lackformulierungen und anschließenden Lackierung der Substratschicht-Deckschicht-Laminate ist u.a. in der zum Zeitpunkt der Anmeldung der vorliegenden Erfindung zum Patent noch unveröffentlichten Europäischen Patentanmeldung mit der Anmeldenummer 18213389.2 beschrieben.

Zunächst wurde der wässrige, zweikomponentige Kunststoffprimer wie oben beschrieben angesetzt und vollflächig mit einer Fließbecherpistole Satajet RP, 1,3 mm, Luftdruck 2,1 bar in 1 Kreuzgang appliziert, um eine Schichtdicke (trocken) von 20-25 $\mu$m zu erzeugen. Nach Applikation wurde der Primer 10 min bei Zimmertemperatur, 30 min bei 80 °C im Umluftofen getrocknet und für 16 h bei Zimmertemperatur gelagert.

Anschließend wurde der einkomponentige Hydrobasislack wie oben beschrieben angesetzt und ebenfalls vollflächig mit einer Fließbecherpistole Satajet HVLP, 1,2 mm, Luftdruck 2,1 bar in 1 Kreuzgang appliziert, um eine Schichtdicke (trocken) von 9-12 $\mu$m zu erzeugen. Der Basislack wurde 10 min bei Zimmertemperatur, 30 min bei 80 °C im Umluftofen getrocknet und für 3 h bei Zimmertemperatur gelagert.

Zuletzt wurde der lösungsmittelbasierte Klarlack wie oben beschrieben hergestellt und unmittelbar nach Vermischen von Stammlack und Härter mit einer Fließbecherpistole Satajet HVLP, 1,2 mm, Luftdruck 2,1 bar in 1 Kreuzgang appliziert, um eine Schichtdicke (trocken) von 25-32 $\mu$m zu erzeugen. Der Klarlack wurde 10 min bei Zimmertemperatur, 45 min bei 80 °C im Umluftofen getrocknet.

**Visuelle Beurteilung der lackierten Gesamtaufbauten:**

Die visuelle Beurteilung der Oberfläche der Gesamtaufbauten aus Substratschicht, Deckschicht und Lack wurde nach Alterung der beschichteten Platten für mindestens 16 h bei 60 °C im Umluftofen gefolgt von 8 h Lagerung bei Zimmertemperatur vorgenommen. Die Ergebnisse der visuellen Beurteilung sind in Tabelle 5 aufgeführt.

Die Note "1" wurde vergeben, wenn die lackierten Substratschicht-Deckschicht-Laminate frei von Blasen, Einfallstellen, Blistern oder Rissen war und wenn sich Fasern aus dem unter der Folie liegenden Substrat allenfalls minimal an der Oberfläche abzeichneten.

Die Note "2" wurde vergeben, wenn die lackierten Substratschicht-Deckschicht-Laminate frei von Blasen, Einfallstellen, Blistern oder Rissen war, wenn sich aber Fasern aus dem unter der Folie liegenden Substrat an der Oberfläche abzeichneten.

Die Note "3" wurde vergeben, wenn die wenn die lackierten Substratschicht-Deckschicht-Laminate Blasen, Einfallstellen, Blister und/oder Risse aufwiesen.

Es zeigte sich, dass die Noten 1 und 2 nur mit einer bestimmten Konzentration der PolyesterKomponenten B1 bis B4 in der Deckschicht erreicht werden konnten, wohingegen ohne Beimischung einer Polyester-Komponente (bei Verwendung der reinen Komponente A) stets Blasen, Einfallstellen, Blister und/oder Risse nach dem Lackieren auftraten (Beispiel 17, Note 3).

Bei Verwendung von PBT (B1) und PET (B2) als Polyester-Komponente wurden bereits ab einem Gehalt von 18 Gew.% bezogen auf das Gesamtgewicht der Zusammensetzung der Deckschicht gute Lackierergebnisse erzielt

(Beispiele 2-4 und 6-8). Bei Verwendung von PBT wurde zudem bereits ab 36 Gew.% der visuelle Eindruck der Oberflächen stark verbessert, indem sich Fasern aus dem unter der Folie liegenden Substrat weniger stark an der lackierten Oberfläche abzeichneten (Beispiel 3), während dieser Effekt bei der Verwendung von PET erst ab einer höheren Konzentration in der Deckschicht zu bemerken war (Beispiel 8).

Bei Verwendung von B3 als Polyester-Komponente wurden bereits ab einem Gehalt von 9 Gew.% bezogen auf das Gesamtgewicht der Zusammensetzung der Deckschicht gute Lackierergebnisse erzielt (Beispiele 9-12), wobei ab 36 Gew.% der visuelle Eindruck der Oberflächen stark verbessert war, da sich Fasern aus dem unter der Folie liegenden Substrat weniger stark an der lackierten Oberfläche abzeichneten (Beispiele 11 und 12).

Bei Verwendung von PEN (B4) als Polyester-Komponente wurden erst ab einem höheren Gehalt von 36 Gew.% bezogen auf das Gesamtgewicht der Zusammensetzung der Deckschicht gute Lackierergebnisse erzielt (Beispiele 15 und 16), wobei sich jedoch noch signifikant Fasern aus dem unter der Folie liegenden Substrat an der lackierten Oberfläche abzeichneten und die Note 1 entsprechend nicht erreicht werden konnte.

Tabelle 4 (E: erfindungsgemäßes Beispiel; V: Vergleichsbeispiel; alle Angaben in Gewichts-%, bezogen auf das Gesamtgewicht der Zusammensetzung):

| | **1 (V)** | **2 (E)** | **3 (E)** | **4 (E)** | **5 (V)** | **6 (E)** | **7 (E)** | **8 (E)** | **9 (E)** | **10 (E)** | **11 (E)** | **12 (E)** | **13 (V)** | **14 (V)** | **15 (E)** | **16 (E)** | **17 (V)** |
|---|---|---|---|---|---|---|---|---|---|---|---|---|---|---|---|---|---|
| (A) | 80.09 | 71.19 | 53.39 | 35.6 | 80.09 | 71.19 | 53.39 | 35.6 | 80.09 | 71.19 | 53.39 | 35.6 | 80.09 | 71.19 | 53.39 | 35.6 | 100 |
| (B1) | 8.9 | 17.8 | 35.6 | 53.39 | | | | | | | | | | | | | |
| (B2) | | | | | 8.9 | 17.8 | 35.6 | 53.39 | | | | | | | | | |
| (B3) | | | | | | | | | 8.9 | 17.8 | 35.6 | 53.39 | | | | | |
| (B4) | | | | | | | | | | | | | 8.9 | 17.8 | 35.6 | 53.39 | |
| (C) | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | |
| (D1) | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | |
| (D2) | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | |
| (D3) | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | |
| (E) | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | |

Tabelle 5: (E: erfindungsgemäßes Beispiel; V: Vergleichsbeispiel)

| **Komposit mit Folie aus Zusammensetzung** | | **1 (V)** | **2 (E)** | **3 (E)** | **4 (E)** | **5 (V)** | **6 (E)** | **7 (E)** | **8 (E)** | **9 (E)** | **10 (E)** | **11 (E)** | **12 (E)** | **13 (V)** | **14 (V)** | **15 (E)** | **16 (E)** | **17 (V)** |
|---|---|---|---|---|---|---|---|---|---|---|---|---|---|---|---|---|---|---|
| Bewertung der Oberflächenqualität nach Lackierung | Note | 3 | 2 | 1 | 1 | 3 | 2 | 2 | 1 | 2 | 2 | 1 | 1 | 3 | 3 | 2 | 2 | 3 |

## Patentansprüche

**1.** Schichtenverbund, umfassend eine Substratschicht S und eine mit der Substratschicht S wenigstens teilweise verbundene Deckschicht D,
wobei das Material der Substratschicht S ein erstes thermoplastisches Polymer umfasst und das Material der Deckschicht D ebenfalls das erste thermoplastische Polymer umfasst,
**dadurch gekennzeichnet, dass**
das erste thermoplastische Polymer ein aromatisches Polycarbonat ist und
in dem Material der Deckschicht D das erste thermoplastische Polymer als Blend mit einer Polyesterkomponente P vorliegt, wobei

i) der Anteil dieser Polyesterkomponente P ≥ 2 Gewichts-%, bevorzugt ≥ 5 Gewichts-%, besonders bevorzugt ≥ 8 Gewichts-%, bezogen auf das Gesamtgewicht des Materials der Deckschicht D, beträgt und wobei die Polyesterkomponente P mindestens ein Polycycloalkylenterephthalat umfasst oder daraus besteht,
ii) der Anteil dieser Polyesterkomponente P ≥ 10 Gewichts-%, bevorzugt ≥ 15 Gewichts-%, besonders bevorzugt ≥ 17 Gewichts-%, bezogen auf das Gesamtgewicht des Materials der Deckschicht D, beträgt und wobei die Polyesterkomponente P mindestens ein Polyalkylenterephthalat umfasst oder daraus besteht,
iii) der Anteil dieser Polyesterkomponente P ≥ 20 Gewichts-%, bevorzugt ≥ 30 Gewichts-%, besonders bevorzugt ≥ 35 Gewichts-%, bezogen auf das Gesamtgewicht des Materials der Deckschicht D, beträgt und wobei die Polyesterkomponente P mindestens ein Polyalkylennaphthalat umfasst oder daraus besteht,
iv) der Anteil dieser Polyesterkomponente P ≥ 2 Gewichts-%, bevorzugt ≥ 5 Gewichts-%, besonders bevorzugt ≥ 8 Gewichts-%, bezogen auf das Gesamtgewicht des Materials der Deckschicht D, beträgt und wobei die Polyesterkomponente P eine Mischung umfasst oder aus einer Mischung besteht aus mindestens 2 der folgenden Komponenten:

- mindestens ein Polycycloalkylenterephthalat,
- mindestens ein Polyalkylenterephthalat,
- mindestens ein Polyalkylennaphthalat.

**2.** Schichtenverbund gemäß Anspruch 1, wobei auf der der Substratschicht S abgewandten Seite der Deckschicht D weiterhin eine Lackschicht L vorliegt, welche wenigstens teilweise mit der Deckschicht D verbunden ist.

**3.** Schichtenverbund gemäß Anspruch 1 oder 2, wobei die Substratschicht S weiterhin Verstärkungsfasern umfasst.

**4.** Schichtenverbund gemäß Anspruch 3, wobei in der Substratschicht S eine Mehrzahl von Lagen jeweils unidirektional ausgerichteter Endlosfasern vorliegen und die Endlosfasern einer Lage nicht die gleiche Orientierung aufweisen wie Endlosfasern von unmittelbar angrenzenden Lagen.

**5.** Schichtenverbund gemäß einem der Ansprüche 1 bis 4, wobei das erste thermoplastische Polymer das Homopolycarbonat auf Basis von Bisphenol A, das Homopolycarbonat auf Basis von 1,1-Bis-(4-hydroxyphenyl)-3,3,5-trimethylcyclohexan, ein Copolycarbonat auf Basis der Monomere Bisphenol A und 1,1-Bis-(4-hydroxyphenyl)-3,3,5-trimethylcyclohexan oder eine Mischung aus wenigstens zwei der vorgenannten Polymere ist.

**7.** Schichtenverbund gemäß einem der Ansprüche 1 bis 6, wobei das Material der Deckschicht D weiterhin einen Schlagzähmodifikator enthält.

**8.** Schichtenverbund gemäß einem der Ansprüche 1 bis 7, wobei die Deckschicht D eine Dicke ≤ 500 μm aufweist.

**9.** Schichtenverbund gemäß einem der Ansprüche 2 bis 8, wobei die Lackschicht L wenigstens eine Grundierungsschicht G, wenigstens eine Basislackschicht B und wenigstens eine Klarlackschicht K umfasst.

**10.** Schichtenverbund gemäß Anspruch 9, wobei wenigstens eine der von der Lackschicht L umfassten Schichten wasserbasiert ist.

**11.** Verfahren zur Herstellung eines Schichtenverbundes, umfassend den Schritt:

I) Verbinden einer Substratschicht S mit einer Deckschicht D,
wobei das Material der Substratschicht S ein erstes thermoplastisches Polymer umfasst und das Material der

Deckschicht D ebenfalls das erste thermoplastische Polymer umfasst,
**dadurch gekennzeichnet, dass**
das erste thermoplastische Polymer ein aromatisches Polycarbonat ist und
in dem Material der Deckschicht D das erste thermoplastische Polymer als Blend mit einem Polyesterkomponente P vorliegt, wobei

i) der Anteil dieser Polyesterkomponente P ≥ 2 Gewichts-%, bevorzugt ≥ 5 Gewichts-%, besonders bevorzugt ≥ 8 Gewichts-%, bezogen auf das Gesamtgewicht des Materials der Deckschicht D, beträgt und wobei die Polyesterkomponente P mindestens ein Polycycloalkylenterephthalat umfasst oder daraus besteht,
ii) der Anteil dieser Polyesterkomponente P ≥ 10 Gewichts-%, bevorzugt ≥ 15 Gewichts-%, besonders bevorzugt ≥ 17 Gewichts-%, bezogen auf das Gesamtgewicht des Materials der Deckschicht D, beträgt und wobei die Polyesterkomponente P mindestens ein Polyalkylenterephthalat umfasst oder daraus besteht,
iii) der Anteil dieser Polyesterkomponente P ≥ 20 Gewichts-%, bevorzugt ≥ 30 Gewichts-%, besonders bevorzugt ≥ 35 Gewichts-%, bezogen auf das Gesamtgewicht des Materials der Deckschicht D, beträgt und wobei die Polyesterkomponente P mindestens ein Polyalkylennaphthalat umfasst oder daraus besteht,
iv) der Anteil dieser Polyesterkomponente P ≥ 2 Gewichts-%, bevorzugt ≥ 5 Gewichts-%, besonders bevorzugt ≥ 8 Gewichts-%, bezogen auf das Gesamtgewicht des Materials der Deckschicht D, beträgt und wobei die Polyesterkomponente P eine Mischung umfasst oder aus einer Mischung besteht aus mindestens 2 der folgenden Komponenten:

- mindestens ein Polycycloalkylenterephthalat,
- mindestens ein Polyalkylenterephthalat,

mindestens ein Polyalkylennaphthalat.

**12.** Verfahren gemäß Anspruch 11, weiterhin umfassend den Schritt:
II) Auftragen wenigstens einer Lackschicht L auf die der Substratschicht S abgewandten Seite der Deckschicht D in dem nach Schritt I) erhaltenen Schichtenverbund.

**13.** Verfahren gemäß Anspruch 11 oder 12, wobei die Substratschicht S weiterhin Verstärkungsfasern umfasst.

**14.** Verfahren gemäß einem der Ansprüche 12 oder 13, wobei die Lackschicht L wenigstens eine Grundierungsschicht G, wenigstens eine Basislackschicht B und wenigstens eine Klarlackschicht K umfasst und wobei gegebenenfalls wenigstens eine der von der Lackschicht L umfassten Schichten wasserbasiert ist.

**15.** Automobilanbauteile, erhältlich unter Verwendung eines Schichtenverbundes gemäß einem der Ansprüche 1 bis 9.

Europäisches Patentamt
European Patent Office
Office européen des brevets

# EUROPÄISCHER RECHERCHENBERICHT

Nummer der Anmeldung
EP 19 20 5537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 878 627 A1 (MITSUBISHI GAS CHEMICAL CO [JP]) 3. Juni 2015 (2015-06-03)<br>* Ansprüche 1,9,11 *<br>----- | 1-15 | INV.<br>B32B27/18<br>B32B27/36<br>C08L67/02<br>C08L69/00 |
| Y | US 4 804 566 A (PAUL WILLIAM C [US] ET AL) 14. Februar 1989 (1989-02-14)<br>* Ansprüche 1,2,4 *<br>----- | 1-15 | |

RECHERCHIERTE SACHGEBIETE (IPC)
B32B
C08L

Der vorliegende Recherchenbericht wurde für alle Patentansprüche erstellt

2

| Recherchenort | Abschlußdatum der Recherche | Prüfer |
|---|---|---|
| Den Haag | 20. März 2020 | Hillebrand, Gerhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 20 5537

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2020

| Im Recherchenbericht angeführtes Patentdokument | Datum der Veröffentlichung | Mitglied(er) der Patentfamilie | Datum der Veröffentlichung |
|---|---|---|---|
| EP 2878627 A1 | 03-06-2015 | CN 104508042 A | 08-04-2015 |
| | | EP 2878627 A1 | 03-06-2015 |
| | | HK 1206052 A1 | 31-12-2015 |
| | | JP 6102924 B2 | 29-03-2017 |
| | | JP WO2014017415 A1 | 11-07-2016 |
| | | KR 20150036580 A | 07-04-2015 |
| | | TW 201412868 A | 01-04-2014 |
| | | US 2015094431 A1 | 02-04-2015 |
| | | WO 2014017415 A1 | 30-01-2014 |
| US 4804566 A | 14-02-1989 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 202017004083 U1
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A1
- WO 2004063249 A1
- WO 200105866 A1
- WO 2000105867 A
- US 5340905 A
- US 5097002 A
- US 5717057 A
- EP 0839623 A
- WO 9615102 A
- EP 0500496 A
- EP 3464471 A1
- EP 3055348 A
- DE 1900270 A
- US 3692744 A
- EP 1226218 B
- EP 18213389
- US 3639147 A
- DE 3333072 A
- DE 3814853 A
- GB 2012191 A
- US 3953644 A
- EP 260447 A
- DE 3903804 A
- EP 320552 A
- DE 3628124 A
- US 4719132 A
- EP 297576 A
- EP 69936 A
- EP 89497 A
- EP 195931 A
- EP 228003 A
- EP 38127 A
- DE 2818100 A
- WO 2017202692 A
- EP 3445827 A
- WO 2018007335 A1

### In der Beschreibung aufgeführte Nicht-Patentliteratur

- **H. SCHNELL.** Chemistry and Physics of Polycarbonates. Interscience Publishers, 1964, S. 28 ff, , S.102 ff
- **D.G. LEGRAND ; J.T. BENDLER.** Handbook of Polycarbonate Science and Technology. Marcel Dekker, 2000, 72ff
- **HANS ZWEIFEL.** Plastics Additives Handbook. Hanser Verlag, 2000
- Kunststoff-Handbuch. Carl-Hanser-Verlag, 1973, vol. VIII, 695 ff